Europäisches Patentamt

European Patent Office

Office européen des brevets

(11) Veröffentlichungsnummer : **0 204 323**
**B1**

(12) EUROPÄISCHE PATENTSCHRIFT

(45) Veröffentlichungstag der Patentschrift :
15.03.89

(51) Int. Cl.⁴ : **F 16 C   1/02**

(21) Anmeldenummer : 86107578.6

(22) Anmeldetag : 04.06.86

(54) Verformbare Antriebswelle.

(30) Priorität : 05.06.85 DE 3520251

(43) Veröffentlichungstag der Anmeldung :
10.12.86 Patentblatt 86/50

(45) Bekanntmachung des Hinweises auf die Patenterteilung : 15.03.89 Patentblatt 89/11

(84) Benannte Vertragsstaaten :
DE FR GB IT SE

(56) Entgegenhaltungen :
DE-C-- 1 240 408
FR-A-- 1 135 337
GB-A--   616 987
US-A-- 2 105 702
US-A-- 2 207 496
US-A-- 2 603 073
US-A-- 2 822 896

(73) Patentinhaber : METZELER Gesellschaft mit beschränkter Haftung
Gneisenaustrasse 15
D-8000 München 50 (DE)

(72) Erfinder : Heynemann, Carl
Flurweg 15
D-8028 Taufkirchen (DE)
Erfinder : Richter, Otto
Brunnerstrasse 3
D-8000 München 40 (DE)

(74) Vertreter : Michelis, Theodor, Dipl.-Ing.
Gneisenaustrasse 15
D-8000 München 50 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine verformbare Antriebswelle, insbesondere für die Räder von Kraftfahrzeugen mit antriebs- bzw. abtriebsseitigen Anschlüssen und einem flexiblen Zwischenstück, das aus einer Vielzahl von hintereinanderliegenden, scheibenförmigen und formsteifen Segmenten mit beidseitig abragenden und ineinandergreifenden Vorsprüngen sowie dazwischenliegenden flexiblen Segmenten aus elamstomerem Material besteht.

Eine derartige Welle ist aus der GB-A-616 987 bekannt. Dabei weisen die formsteifen scheibenförmigen Segmente auf beiden Seiten sich radial erstreckende Stege auf, zwischen denen in Umfangsrichtung kreisringabschnittförmige Gummielemente angeordnet sind.

Eine solche Welle kann zwar relativ große Tordierungen um die Längsachse aufnehmen, für die Übertragung großer Drehmomente ist sie jedoch wegen der relativ großvolumigen, auf Druck beanspruchten Gummielemente nur weniger geeignet.

Demgegenüber liegt der vorliegenden Erfindung die Aufgabe zugrunde, eine verformbare Antriebswelle zu schaffen, die torsionssteif ist, also relativ große Drehmomente übertragen kann und gleichzeitig biegeweich ist, also auch große Verschiebungen zwischen den zu verbindenden Aggregaten übertragen kann, und die darüber hinaus die Übertragung von Körperschall isoliert.

Zur Lösung dieser Aufgabe ist erfindungsgemäß vorgesehen, daß die formsteifen Segmente auf mindestens einer Seite trichterförmige Vorsprünge und auf der jeweils gegenüberliegenden Seite entsprechende trichterförmige Hohlräume aufweisen, daß die trichterförmigen Vorsprünge des einen formsteifen Segmentes durch das benachbarte flexible Segment hindurch in die trichterförmigen Hohlräume des benachbarten formsteifen Segmentes eingreifen und daß die formsteifen und die flexiblen Segmente an den Verbindungsflächen gehaftet sind.

Durch die relativ geringe Dicke der flexiblen Segmente ergibt sich somit eine formschlüssige Verdreh-Verbindung zwischen benachbarten formsteifen Segmenten, wodurch eine hohe Torsionssteifigkeit geschaffen ist.

Die flexiblen Segmente werden aus einem geeigneten elastomeren Material, bspw. durch ausvulkanisierte Gummischichten, hergestellt, die zwischen den benachbarten formsteifen Segmenten angeordnet sind.

Diese flexiblen Segmente können auch durch einen Gießvorgang hergestellt werden ; zu diesem Zweck werden die formsteifen Segmente in definierten Abständen voneinander angeordnet ; der gewünschte Abstand wird durch Abstandhalter gewährleistet, die an den Außenrändern der formsteifen Segmente angebracht ist.

Das Kautschukmaterial wird in die Zwischenräume zwischen den einzelnen formsteifen Segmente eingefüllt und ausvulkanisiert ; anschlie-ßend, nämlich z. B. nach dem Ausvulkanisieren des Kautschuks zum Gummi, werden die Abstandshalter entfernt, so daß keine starre Verbindung zwischen den benachbarten formsteifen Segmenten mehr besteht.

Zwischen den benachbarten flexiblen und formsteifen Segmenten kann eine formschlüssige axiale Verbindung vorgesehen sein ; zu diesem Zweck sind die flexiblen Segmente mit druckknopfartigen Vorsprüngen versehen, die durch Öffnungen in den trichterförmigen Vorsprüngen der formsteifen Segmente greifen und dadurch eine zusätzliche Biege-Verbindung in der Zugzone herstellen.

Die Übertragung von Torsion- und Biegemomenten, die auf diese Antriebswelle einwirken, erfolgt also teilweise durch Kraftschluß, teilweise durch Formschluß und teilweise durch Stoffschluß, so daß sich einerseits eine hohe Torsionssteifigkeit, wie sie für die Übertragung von hohen Drehmomenten erforderlich ist, und an dererseits eine hohe Verformbarkeit senkrecht zur Richtung der Antriebswelle ergibt, wie sie bei starken Relativbewegungen der miteinander zu verbindenden Aggregate benötigt wird.

Die Erfindung wird im folgenden anhand von Ausführungsbeispielen unter Bezugnahme auf die beiliegenden, schematischen Zeichnungen näher erläutert. Es zeigen

Fig. 1 einen Schnitt durch eine Antriebswelle,

Fig. 2 eine Seitenansicht eines formsteifen Segmentes,

Fig. 3 eine Draufsicht auf ein formsteifes Segment,

Fig. 4 die räumliche Anordnung von drei formsteifen Segmenten vor dem Eingießen des Kautschuks,

Fig. 5 eine Modifikation der trichterförmigen Vorsprünge,

Fig. 6 eine weitere Modifikation der trichterförmige Vorsprünge, und

Fig. 7 eine weitere Modifikation der trichterförmigen Vorsprünge.

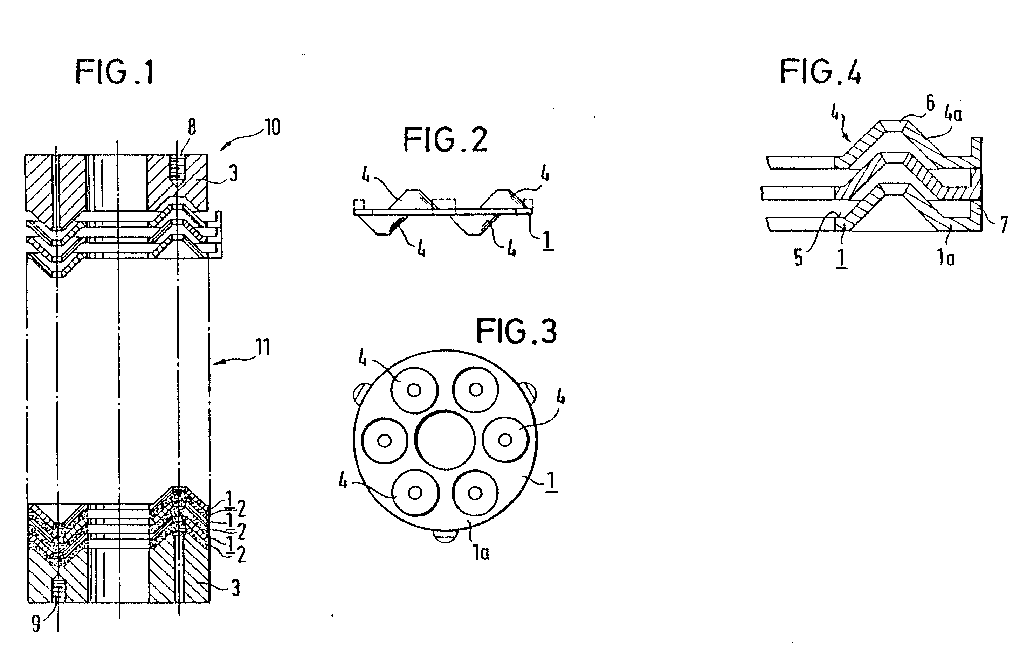

Die aus Figur 1 ersichtliche, allgemein durch das Bezugszeichen 10 angedeutete Antriebswelle für die Räder eines Kraftfahrzeugs weist zwei Flansche 3 auf, die durch Schrauben 9, 8 an den miteinander zu verbindenden Aggregaten (nicht dargestellt) befestigt sind.

Das flexible Zwischenstück 11 zwischen den beiden starren Flanschen 3 wird durch eine abwechselnde Folge von scheibenförmigen, formsteifen Segmenten 1 und scheibenförmigen, flexiblen Segmenten 2 gebildet.

Wie man aus den Figuren 2 und 3 erkennt, sind die scheibenförmigen, formsteifen Segmente 1 aus ihren beiden Oberflächen mit trichterförmigen Vorsprüngen 4 versehen, die wiederum auf der anderen Seite zu trichterförmigen Vertiefungen führen. Bei der Ausführungsform nach Fig. 3 sind bspw. auf jeder Seite drei trichterförmige Vorsprünge und dementsprechend auch drei trichterförmige Vertiefungen vorgesehen, wobei auf jeder Seite Vorsprünge und Vertiefungen einander abwechseln.

Die Zahl der trichterförmigen Vorsprünge 4 kann variiert werden, sollte jedoch drei nicht unterschreiten, um die formschlüssige Verdreh-Verbindung zwischen den benachbarten formsteifen Segmenten 1 bei Beanspruchung nicht zu unterbrechen.

Die Figuren 4 bis 7 zeigen verschiedene Formen der trichterförmigen Vorsprünge 4 : Alle Ausführungsformen gehen von einem scheibenförmigen Grundkörper 1a der formsteifen Segmente 1 aus, auf der die trichterförmigen Vorsprünge 4 ausgebildet sind.

Bei der Ausführungsform nach Fig. 4 weisen die trichterförmigen Vorsprünge 4 Seitenwände 4a auf, die etwa unter einem Winkel von 45° zur scheibenförmigen Grundfläche 1a verlaufen.

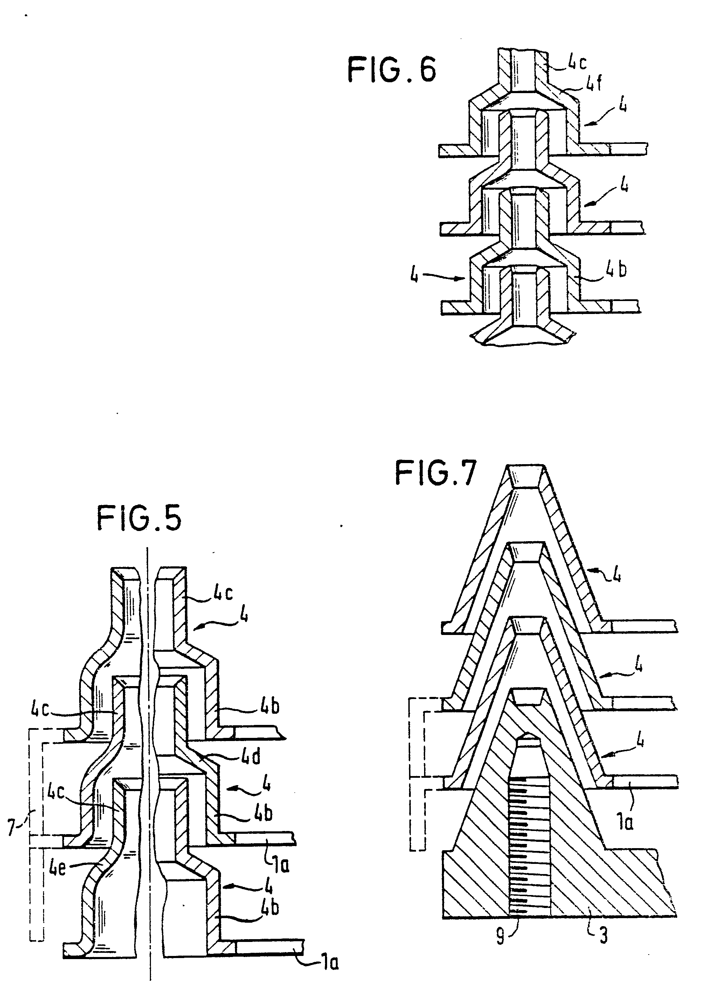

Bei der Ausführungsform nach Fig. 5 bestehen die trichterförmigen Vorsprünge 4 aus einem zylindrischen Grundkörper 4b, an den sich ein weiterer zylindrischer Körper 4c mit verringerten Durchmesser anschließt. Der Übergang zwischen den beiden zylindrischen Körpern 4b und 4c erfolgt auf der gemäß der Darstellung in Fig. 5 rechten Seite durch eine ebene Fläche 4d und auf der linken Seite durch eine gewölbte Fläche 4e.

Bei der Ausführungsform nach Fig. 6 sind die beiden zylindrischen Körper 4b und 4c durch einen konischen Übergangsbereich 4f miteinander verbunden.

Fig. 7 zeigt schließlich eine Ausführungsform, bei der die Seitenwände der trichterförmigen Vorsprünge 4 etwa unter einem Winkel von 70 bis 75° zur Grundfläche 1a verlaufen und etwa doppelt so tief wie die Vorsprünge 4 bei der Ausführungsform nach Fig. 4 sind.

Die dem Zwischenstück 11 zugewandten Stirnflächen der Flansche 3 sind mit entsprechenden, trichterförmigen Vorsprüngen bzw. Vertiefungen (siehe Fig. 1) versehen, so daß sich auch an diesen Stirnflächen form- und kraftschlüssige Verdreh-Verbindungen ergeben.

Die Spitzen der trichterförmigen Vorsprünge 4 bzw. der dazu komplementären trichterförmigen Aussparungen sind mit durchgehenden Öffnungen 6 versehen, wie man bspw. in Fig. 4 erkennt.

Zwischen den scheibenförmigen, formsteifen Segmenten 1 mit den trichterförmigen Vorsprüngen bzw. Vertiefungen sind flexible, scheibenförmige Segmente 2 angebracht, die aus einem elastomeren Material, insbesondere Gummi bestehen.

Die flexiblen scheibenförmigen Segmente 2 können durch Gießen hergestellt werden ; zu diesem Zweck werden die formsteifen Segmente 1 durch die aus Fig. 4 ersichtlichen Abstandshalter 7 in einem vorgegebenen Abstand voneinander gehalten, so daß Zwischenräume zwischen den formsteifen Segmenten 1 entstehen. In diese Zwischenräume wird die Kautschukmasse eingegossen und ausvulkanisiert. Nach Beendigung der Vulkanisation werden die Abstandshalter 7 entfernt, so daß keine starre Verbindung zwischen den formsteifen Segmenten 1 mehr besteht.

Die zähflüssige Kautschukmasse dringt auch in die Öffnungen 6 der trichterförmigen Vorsprünge bzw. Aussparungen ein, so daß auch in diesem Bereich — und nicht nur im Bereich der trichterförmigen Vorsprünge und Aussparungen — eine formschlüssige Biege-Verbindung durch die druckknopfartige Ausbildung der durch die Öffnungen 6 greifenden Vorsprünge der flexiblen Segmenten entsteht.

Die trichterförmigen Vorsprünge 4 der formstreifen Segmente greifen also durch das benachbarte flexible Segment 2 hindurch in die zugehörigen trichterförmigen Aussparungen des nächsten formsteifen Segmentes 1 ein, wodurch eine formschlüssige Verdreh-Verbindung zwischen den benachbarten formsteifen Segmenten 1 besteht. Durch die zwischen den formsteifen Segmenten 1 befindliche Gummischicht ist jedoch eine gewisse Torsionsbewegung den benachbarten formsteifen Segmenten 1 möglich ; außerdem erlaubt dies eine gewisse Verformung der Welle 10 senkrecht zu ihrer Erstreckungsrichtung.

Außerdem liegt an den in Figur 4 durch das Bezugszeichen 5 angedeuteten Verbindungsflächen zwischen formsteifen, harten Segmenten 1 und flexiblen Segmenten 2 eine weitere kraftschlüssige Verdreh- und Biege-Verbindung vor, nämlich an den Übergängen zwischen der Grundfläche 1a und den trichterförmigen Vorsprüngen 4, die noch durch die formschlüssige Zugverbindung in den Öffnungen 6 der trichterförmigen Vorsprünge 4 unterstützt wird.

Die Übertragung der auf die Antriebswelle 10 einwirkenden Torsions- und Biegemomente erfolgt also durch eine Kombination von Kraft- und Formschluß, gegebenenfalls noch unterstützt durch einen Stoffschluß, wenn man nämlich die Oberflächen der flexiblen Segmente 2 mit einem Haftmittel versieht.

Bei einer solchen verformbaren Antriebswelle wird die Inkompressibilität des elastomeren Materials, insbesondere in der Druckzone des gebogenen Wellenabschnittes, ausgenutzt, wodurch eine Selbstzentrierung der Welle und eine Verringung der Auslenkung in Biegerichtung erreicht werden. Diese Verringerung der Auslenkung in Biegerichtung führt wiederum zu einer erwünschten Erhöhung der biegekritischen Drehzahl der Antriebswelle.

## Patentansprüche

1. Verformbare Antriebswelle (1), insbesondere für die Räder von Kraftfahrzeugen, mit antriebs- bzw. abtriebsseitigen Anschlüssen (3) und einem flexiblen Zwischenstück (11), das aus einer Vielzahl von hintereinanderliegenden, scheibenförmigen und formsteifen Segmenten (1) mit beidseitig abragenden und ineinandergreifenden Vorsprüngen (4) sowie dazwischenliegenden flexiblen Segmenten (2) aus elastomerem Material besteht, dadurch gekennzeichnet, daß die formsteifen Segmente (1) auf mindestens einer Seite trichterförmige Vorsprünge (4) und auf der jeweils gegenüberliegenden Seite entsprechende trichterförmige Hohlräume aufweisen, daß die trichterförmigen Vorsprünge (4) des einen formsteifen Segmentes (1) durch das benachbarte, flexible Segment (2) hindurch in die trichterförmigen Hohlräume des benachbarten formsteifen Segmentes (1) eingreifen und daß die formsteifen und flexiblen Segmente (1, 2) an den Verbindungsflächen gehaftet sind.

2. Verformbare Antriebswelle nach Anspruch 1, dadurch gekennzeichnet, daß die flexiblen Segmente (2) aus einem elastomeren Material, insbesondere Gummi, bestehen.

3. Verformbare Antriebswelle nach einem der Ansprüche 1 oder 2, dadurch gekennzeichnet, daß auf jeder Seite der scheibenförmigen Grundfläche (1a) der formsteifen Segmente (1) eine abwechselnde Folge von trichterförmigen Vorsprungen und Aussparungen (4) angeordnet ist.

4. Verformbare Antriebswelle nach Anspruch 3, dadurch gekennzeichnet, daß auf jeder Seite der scheibenförmigen Grundfläche (1a) mindestens drei trichterförmige Vorsprünge und Aussparungen (4) vorgesehen sind.

5. Verformbare Antriebswelle nach einem der Ansprüche 1 bis 4, dadurch gekennzeichnet, daß die Enden der trichterförmigen Vorsprünge (4) Öffnungen (6) aufweisen, die mit dem elastomeren Material der flexiblen Segmente (2) gefüllt sind.

6. Verformbare Antriebswelle nach einem der Ansprüche 1 bis 5, dadurch gekennzeichnet, daß die formsteifen Segmente (1) durch Abstandshalter (7) in einem vorgegebenen Abstand voneinander gehalten sind, und daß die Abstandshalter (7) nach dem Einfüllen des elastomeren Materials in die Zwischenräume zwischen den formsteifen Segmenten (1) entfernbar sind.

7. Verformbare Antriebswelle nach einem der Ansprüche 1 bis 6, dadurch gekennzeichnet, daß die äußeren Stirnflächen des flexiblen Zwischenstückes (11) mit Flanschen (3) verbunden sind, die an ihren Stirnflächen entsprechende trichterförmige Aussparungen bzw. Vertiefungen haben.

8. Verformbare Antriebswelle nach einem der Ansprüche 1 bis 7, dadurch gekennzeichnet, daß die Oberflächen der formsteifen Segmente (1) durch ein Haftmittel mit den benachbarten Oberflächen der flexiblen Segmente (2) verbunden sind.

## Claims

1. Deformable drive shaft (1), in particular for the wheels of motor vehicles, having input- and output-side connections (3) and a flexible intermediate piece (11) which comprises a multiplicity of disc-shaped and dimensionally stable segments (1), lying one behind the other, having interlocking projections (4) protruding on both sides and flexible segments (2) of elastomeric material situated therebetween, characterized in that, on at least one side, the dimensionally stable segments (1) have funnel-shaped projections (4) and, on the opposite side in each case, corresponding funnel-shaped hollows, in that the funnel-shaped projections (4) of the one dimensionally stable segment (1) engage through the adjacent flexible segment (2) into the funnel-shaped hollows of the adjacent dimensionally stable segment (1), and in that the dimensionally stable and flexible segments (1, 2) are adhesively bonded at the connecting surfaces.

2. Deformable drive shaft according to Claim 1, characterized in that the flexible segments (2) are composed of an elastomeric material, in particular rubber.

3. Deformable drive shaft according to either of Claims 1 or 2, characterized in that an alternating sequence of funnel-shaped projections and recesses (4) is arranged on each side of the disc-shaped base surface (1a) of the dimensionally stable segments (1).

4. Deformable drive shaft according to Claim 3, characterized in that at least three funnel-shaped projections and recesses (4) are provided on each side of the disc-shaped base surface (1a).

5. Deformable drive shaft according to one of Claims 1 to 4, characterized in that the ends of the funnel-shaped projections (4) have openings (6) which are filled by the elastomeric material of the flexible segments (2).

6. Deformable drive shaft according to one of Claims 1 to 5, characterized in that the dimensionally stable segments (1) are held at a specified mutual interval by spacers (7), and in that, following the introduction of the elastomeric material into the gaps between the dimensionally stable segments (1), the spacers (7) can be removed.

7. Deformable drive shaft according to one of Claims 1 to 6, characterized in that the outer end faces of the flexible intermediate piece (11) are connected to flanges (3) which, at their end faces, have corresponding funnel-shaped recesses or depressions.

8. Deformable drive shaft according to one of Claims 1 to 7, characterized in that the surfaces of the dimensionally stable segments (1) are connected to the adjacent surfaces of the flexible segments (2) by a bonding agent.

## Revendications

1. Arbre d'entraînement (1) déformable, notamment pour les roues de véhicules automobiles, comprenant des moyens de liaison (3) côté menant et côté mené et une pièce intermédiaire flexible (11) qui est constituée d'un grand nombre de segments successifs, en forme de disques indéformables (1) pourvus de parties saillantes (4) en saillie des deux côtés et s'emboîtant les uns dans les autres, ainsi que, entre eux, des segments flexibles (2) en matière élastomère, caractérisé en ce que les segments indéformables (1) comportent, au moins d'un côté, des parties saillantes (4) en forme d'entonnoir et, du côté opposé, des cavités correspondantes en forme d'entonnoir, en ce que les parties saillantes (4), en forme d'entonnoir, de l'un des segments indéformables (1) pénètrent, en passant à travers le segment flexible (2) voisin, dans les cavités, en forme d'entonnoir, du segment indéformable voisin (1) et en ce que les segments indéformables et flexibles (1, 2) adhèrent entre eux au niveau de leurs surfaces de liaison.

2. Arbre d'entraînement déformable suivant la revendication 1, caractérisé en ce que les segments flexibles (2), sont en une matière élastomère, notamment en caoutchouc.

3. Arbre d'entraînement déformable suivant l'une des revendications 1 ou 2, caractérisé en ce que de chaque côté de la surface de base (1a) en forme de disque des segments indéformables (1) est disposée une succession alternée de parties saillantes et de parties évidées (4) en forme d'entonnoir.

4. Arbre d'entraînement déformable suivant la revendication 3, caractérisé en ce que de chaque côté de la surface de base (1a) en forme de disque sont prévues au moins trois parties saillantes et trois parties évidées (4) en forme d'entonnoir.

5. Arbre d'entraînement déformable suivant l'une des revendications 1 à 4, caractérisé en ce que les extrémités des parties saillantes (4) en forme d'entonnoir comportent des orifices (6) qui sont emplis de la matière élastomère des segments flexibles (2).

6. Arbre d'entraînement déformable suivant l'une des revendications 1 à 5, caractérisé en ce que les segments indéformables (1) sont maintenus à une distance donnée à l'avance les uns des autres par des entretoises (7) et en ce que les entretoises (7) peuvent être enlevées, après remplissage par de la matière élastomère des intervalles compris entre les segments indéformables (1).

7. Arbre d'entraînement déformable suivant l'une des revendications 1 à 6, caractérisé en ce que les surfaces frontales extérieures de la pièce intermédiaire flexible (11) sont reliées par des brides (3) qui présentent sur leurs surfaces frontales des parties évidées ou des cavités correspondantes en forme d'entonnoir.

8. Arbre d'entraînement déformable suivant l'une des revendications 1 à 7, caractérisé en ce que les surfaces des segments indéformables (1) sont reliées par un agent adhésif aux surfaces voisines des segments flexibles (2).

# FIG.1

# FIG.2

# FIG.3

# FIG.4

EP 0 204 323 B1

FIG.6

FIG.5

FIG.7

2